Europäisches Patentamt
European Patent Office
Office européen des brevets

Publication number: 0 367 714 A1

# EUROPEAN PATENT APPLICATION

Application number: 89810734.7

Date of filing: 27.09.89

Int. Cl.[5] C08K 5/531, C08L 75/04, C08L 79/04

Priority: 06.10.88 GB 8823481

Date of publication of application: 09.05.90 Bulletin 90/19

Designated Contracting States: DE FR GB IT NL

Applicant: CIBA-GEIGY AG
Klybeckstrasse 141
CH-4002 Basel(CH)

Inventor: Gainer, James, Dr.
7 Stechworth Drive Boothstown
Worsley Manchester M28 4FU(GB)

## Flame retardant composition.

The present invention provides a polyurethane or polyisocyanurate having incorporated therein a flame retardant amount of a melamine phosphonic acid salt of the general formula (I)

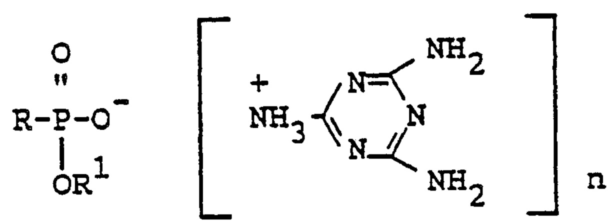

(I)

in which R is a $C_1$-$C_2$ alkyl group, a $C_5$-$C_6$ cycloalkyl group, a $C_6$-$C_{12}$ aryl group or a $C_7$-$C_{14}$ aralkyl group, R being unsubstituted or substituted by one or more of chlorine, bromine, hydroxy, amino, cyano or carboxy; $R^1$ is hydrogen, $C_1$-$C_6$ alkyl or $C_6$-$C_{12}$ aryl which is unsubstituted or substituted by one or more of chlorine, bromine or hydroxy, or $R^1$ is a negative valency bond; and n is 1, or 2 when $R^1$ is a negative valency bond, provided that when R is methyl, $R^1$ is not hydrogen, methyl or a negative valency bond and when R is phenyl $R^1$ is not hydrogen or a negative valency bond.

EP 0 367 714 A1

## Flame Retardant Compositions

The present invention relates to melamine salts of phosphonic acids in polyurethanes and polyisocyanurates to render them more flame retardant.

Polyurethanes and polyisocyanurates are usually made more flame retardant by adding a phosphorus-containing compound, a halogen-containing compound or a mixture thereof. One commonly used phosphorus-containing compound is dimethyl methyl phosphonate (DMMP). However there are certain problems associated with the use of DMMP, for example it is a relatively volatile liquid (boiling point 181 °C) which means that material may be lost by volatilisation under certain circumstances.

Another flame retardant additive used, especially in high resilient polyurethane foams is melamine, but this needs to be used in comparatively large amounts to achieve a good effect.

We have now found that certain melamine salts of phosphonic acids can be used and which avoid the disadvantages mentioned above.

Accordingly, the present invention provides a polyurethane or polyisocyanurate having incorporated therein a flame retardant amount of a melamine phosphonic acid salt of the general formula (I)

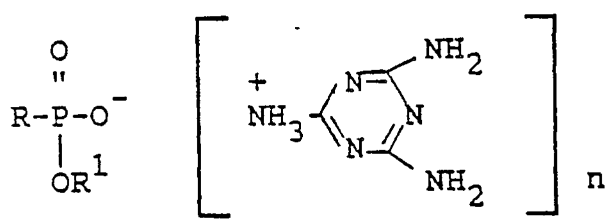

(I)

in which R is a $C_1$-$C_2$ alkyl group, a $C_5$-$C_6$ cycloalkyl group, a $C_6$-$C_{12}$ aryl group or a $C_7$-$C_{14}$ aralkyl group, R being unsubstituted or substituted by one or more of chlorine, bromine, hydroxy, amino, cyano or carboxy; $R^1$ is hydrogen, $C_1$-$C_6$ alkyl or $C_6$-$C_{12}$ aryl which is unsubstituted or substituted by one or more of chlorine, bromine or hydroxy, or $R^1$ is a negative valency bond; and n is 1, or 2 when $R^1$ is a negative valency bond, provided that when R is methyl, $R^1$ is not hydrogen, methyl or a negative valency bond and when R is phenyl $R^1$ is not hydrogen or a negative valency bond.

R and $R^1$, when substituted, are preferably substituted by one or two substituents, most preferably by one substituent.

As alkyl groups, R may be, for example methyl, ethyl, hydroxymethyl, chloromethyl, cyanomethyl, aminomethyl, carboxymethyl, carboxyhydroxymethyl, aminoethyl, bromoethyl and hydroxyethyl.

As cycloalkyl groups R may be for example, cyclopentyl, cyclohexyl, carboxycyclohexyl, hydroxycyclopentyl, aminocyclohexyl.

As aryl groups, R or $R^1$ ma, be phenyl, hydroxyphenyl, naphthyl, hydroxynaphthyl.

As aralkyl groups R may be benzyl, hydroxybenzyl, bromobenzyl, chlorobenzyl, naphthylmethyl.

As alkyl groups, $R^1$ may be methyl, ethyl, isopropyl, n-butyl, sec-butyl, isoamyl, or n-hexyl.

Examples of phosphonic acids which may be used to form melamine salts include

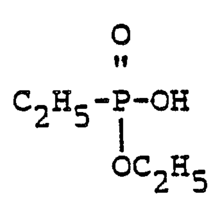

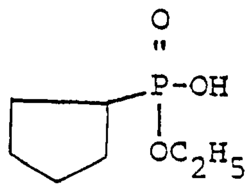
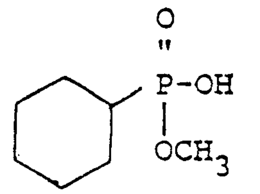

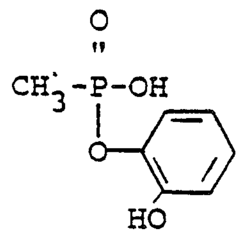

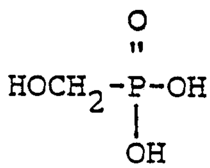
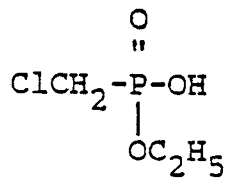
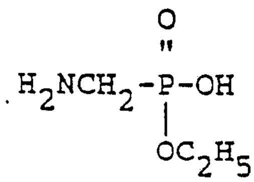

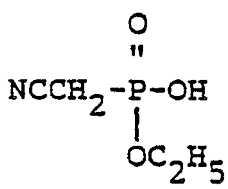

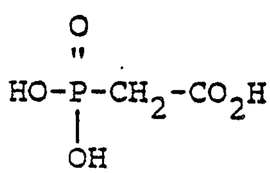
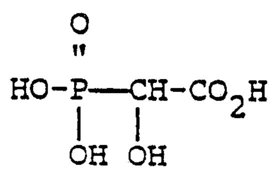

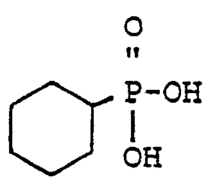

and

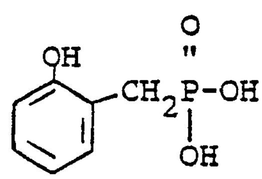

A polyurethane or polyisocyanurate is preferred, in which R is unsubstituted or substituted by a chlorine, hydroxy, amino, cyano or carboxy group.

Further, a polyurethane or polyisocyanurate is preferred, in which $R^1$ is hydrogen, $C_1$-$C_2$-alkyl or 2-hydroxyphenyl, and especially in which R is methyl, carboxymethyl, carboxyhydroxymethyl, hydroxymethyl, cyclohexyl or 2-hydroxybenzyl.

The melamine salts are either known or can be made by methods known per se. Thus they may be prepared by reacting the phosphonic acid or phosphonic acid mono ester with melamine in a suitable solvent such as water, an alcohol or mixtures thereof. The preferred solvent is water. The reaction may be carried out at temperatures from ambient up to the reflux temperature of the solvent.

The melamine salts may be used alone or together with other flame retardants such as those given below for imparting flame retardancy to rigid or flexible polyurethanes or polyisocyanurate, in the presence of a blowing agent, if a foams is desired, and a catalyst. The present invention is applicable to the whole

range of polymers having an isocyanate index of from 1 to 6, preferably from 1 to 4.5.

The salts may be incorporated into the polyurethane or polyisocyanurate by adding them to the reaction mixture used to prepare the polyurethane or polyisocyanurate. Alternatively the salts may be added to the reactant containing hydroxyl groups (polyester or polyether polyol) prior to its reaction with the polyisocyanate.

The amount of melamine salt which may be incorporated in the polyurethane or polyisocyanurate depends on the level of flame retardancy required. Typically the amount of melamine salt may be from 1 to 200 parts, preferably 3 to 100 parts by weight per hundreds parts by weight of polyol used to make the polyurethane or polyisocyanurate.

The melamine salt may be used with other flame retardant compounds. These may be, for example, halogen-containing compounds such as aliphatic and aromatic bromine compounds, oxyalkylated phosphate esters, chloroalkyl phosphates, phosphonates or tri-aryl phosphates. Examples of suitable compounds are pentabromo-diphenyl ether, dibromocresyl glycidyl ether, tetra-bromo bisphenol A, dibromoneopentyl glycol, a diol produced by the reaction of tetrabromophthalic anhydride with ethylene oxide and/or propylene oxide, tris (chloroethyl) phosphate, tris (monochloropropyl, phosphate, diethyl bis (hydroxyethyl) aminomethyl phosphonate, and isopropylated or t-butylated phenyl phosphate mixtures as described in British Patent Specification No. 1146173 tricresyl phosphate, trixylyl phosphate and cresyl diphenyl phosphate. The weight ratio of the melamine salt to other flame retardant compounds may be from 5:95 to 95:5.

The melamine salts may also be used in conjunction with melamine itself other melamine salts e.g. melamine borate or melamine phosphate or exfoliated graphite as used in combustion modified foams.

The isocyanates and polyols used in making the polyurethane or polyisocyanurate can be any of those known in the art. The amount of polyisocyanate is varied to produce the desired product.

The isocyanate is ordinarily a liquid such as toluene di-isocyanate, methylene diphenyl di-isocyanate, polymeric methylene diphenyl di-isocyanate, hydrogenated methylene diphenyl di-isocyanate, hexamethylene di-isocyanate, isophorone di-isocyanate, and any polyisocyanate prepolymer containing two or more unreacted isocyanate radicals and the like. Conventionally, the toluene di-isocyanate used in the invention contains isomers of 2,4- and 2,6-toluene di-isocyanate. The concentration of these isomers is not critical.

The polyol for rigid foam may be a polyfunctional active hydrogen compound derived from the reaction of a polyhydroxylic compounds such as glycerol, sucrose, sorbitol, trimethylol propane, pentaerythritol, triethanolamine, or an amine such as ethylenediamine, polyaromatic amine, or an aromatic Mannich base with propylene oxide and/or ethylene oxide.

Generally for production of flexible polyurethane foams the polyols are polyether polyols such as polyoxyethylene oxypropylene diols, polyoxyethylene oxypropylene triols, castor oil and methylglucoside polyether polyols having average molecular weights in the range of approximately 250-6500. Other polyols which may be used in place of polyether polyols are the polyester polyols, such as the reaction products of an aliphatic difunctional carboxylic acid e.g. adipic acid, sebacic acid, with a di- or tri-functional hydroxy compound e.g. ethylenc glycol, diethylene glycol, propylene glycol, 1,4-butylene glycol and butane triol.

Additionally polyols such as glycerol, hexane triol, butane triol, trimethylol propane, trimethylol ethane, and pentaerythritol, may be included in the polymerisation reaction with the polyol to maintain a desirable stoichiometrically balanced isocyanate to hydroxyl ratio.

In preparing the foamed polyurethanes and polyisocyanurates there can be used any of the conventional basic catalysts such, for example, as sodium hydroxide, sodium acetate, tertiary amines or materials which generate tertiary amines such as trimethylamine, triethylene diamine, N-methyl morpholine, N,N-dimethyl cyclohexylamine, and N,N-dimethyl aminoethanol. Also applicable are metal compounds such as hydrocarbon tin alkyl carboxylates, e.g. dibutyl tin diacetate, dibutyl tin dioctoate,dibutyl tin dilaurate and stannous octoate; as well as other compounds intended to promote trimerisation of the isocyanate such as 2,4,6- tris (N,N-dimethylamino methyl) phenol, 1,3,5-tris (N,N-dimethyl-3-aminopropyl)-s-hexahydrotriazine, potassium octoate, potassium acetate and catalysts such as those sold under the Trade Names DABCO® TMR and POLYCAT®43.

Many other catalysts may be substituted for those listed above, as desired. The amount of catalyst used may be in the range of about 0.05% to about 5% or more by weight based upon the total weight of polyol(s) employed. Mixtures of the above and/or other catalysts may also be utilised.

To impart a foamed or cellular structure to the blended polyol-polyisocyanate mixture, a suitable blowing agent or system of blowing agents must be added or produced in-situ. Suitable blowing agents include the liquid but relatively volatile halogenated hydrocarbons such as dichlorofluoromethane, trichlorofluoromethane and methylene chloride. These are added as liquids in quantities of about 5% to about

50%, by weight of the polyol, to the one or more components of the polyol-polyisocyanate mixture and are substantially volatilised in the liquid mixture to effect cell formation. Subsequently, the mixture cures to its final cellular shape.

Although the halogenated hydrocarbons are especially desirable as blowing agents when exceptional insulative properties are desired, other blowing agents, such as carbon dioxide generated by adding water to the polyol or simultaneously with the addition of the polyisocyanate, can be utilised especially for flexible open-called foams.

It should also be noted that foaming may also be effected by combining the use of a blowing agent with the addition of water to the polyol.

In order to obtain relatively uniform distribution of the various components of the liquid system and to achieve the derived formation of bubbles, an emulsifier and/or surfactant may be incorporated into the mixture. These materials are physical in their effect and are not always necessary, especially if denser foams are desired. Any of the many hundreds of conventional surfactants can be used in amounts of up to 4% based on the weight of polyol used. Suitable surfactants are polydimethylsiloxane and polydimethylsiloxane polyalkylene copolymers, and the like known in the art.

It is also within the scope of the present invention to employ other materials in the compositions of the present invention where one desires to achieve a particular end result. Such materials include, without limitation, adhesion promotors, antioxidants, antistatic agents, antimicrobials, colourants, heat stabilisers, light stabilisers, pigments, plasticisers, preservatives, antidripping agents, impact strength modifiers, ultraviolet stabilisers and fillers as described in Modern Plastics Encyclopedia, Volume 58, Number 10A, pages 170-187.

The invention is illustrated by the following Examples in which "parts" are parts by weight.

Example 1:

A solution of mono methylphosphonic acid 2-hydroxyphenyl ester (37.6 parts, 0.2 mol) in water (50 millilitres) is added dropwise to a suspension of melamine (25.2 parts, 0.25 mol) in water (500 millilitres) at refluxing temperatures over 30 mins. A clear solution is formed. Heating is continued for a further 2 hours and the reaction mixture is evaporated to dryness under reduced pressure. The solid project is collected, washed with methanol and dried at 80 °C under vacuum to give 54 parts of methylphosphonic acid 2-hydroxyphenyl ester melamine salt having melting point 206-210 °C. Calculated for $C_{10}H_{15}N_6O_4P.H_2O$: %C 36.14, %H 5.12, %N 25.30, %P 9.34. Found: %C 35.83, %H 5.12, %N 25.08, %P 9.22.

Example 2:

Using the procedure described in Example 1, reaction of carboxymethylphosphonic acid (35.0 parts, 0.25 mol) with melamine (35.0 parts, 0.25 mol) gives 63 parts of the corresponding melamine salt having melting point 250 °C. Calculated for $C_5H_{11}N_6O_5P$: %C 22.56, %H 4.14, %N 31.58, %P 11.65. Found: %C 22.96, %H 4.18, %N 32.98, %P 11.34.

Example 3:

Using the procedure described in Example 1, reaction of carboxyhydroxymethylphosphonic acid (62.4 parts, 0.2 mol - as a 50% aqueous solution) with melamine (25.2 parts, 0.2 mol) gives 52 parts of the corresponding melamine salt having melting point 250 °C. Calculated for $C_5H_{11}N_6O_6P$: %C 21.28, %H 3.90, %N 29.79, %P 10.99. Found: %C 21.25, %H 3.72, %N 29.89, %P 10.91.

Example 4:

Using the procedure described in Example 1, reaction of 2-hydroxybenzylphosphonic acid (10.0 parts, 0.053 mol) with melamine (6.7 parts, 0.053 mol) gives 16.5 parts of the corresponding melamine salt having melting point 200-204 °C. Calculated for $C_{10}H_{15}N_6O_4P.H_2O$: % C 36.14, % H 5.16, % N 25.29, % P 9.32. Found: % C 36.23, % H 5.01, % N 25.27, % P 9.33.

Example 5:

Using the procedure described in Example 1, reaction of cyclohexylphosphonic acid (6.3 parts. 0.0386 mol) with melamine (4.9 parts, 0.0386 mol) gives 9.1 parts of the corresponding melamine salt having melting point >250 °C. Calculated for $C_9H_{19}N_6O_3P.H_2O$: % C 37.24, % H 6.59, % N 28.95, % P 10.67. Found: % C 37.17, % H 6.45, % N 28.23, % P 10.86.

Example 6:

Using the procedure described in Example 1, reaction of cardroxymethylphosphonic acid (22.4 parts, 0.2 mol) with melamine (25.2 parts, 0.2) gives 45.8 parts of the corresponding melamine salt having melting point >240 °C.

Examples 7 to 11

The following examples illustrate the ease with which flame retardant rigid foamed polyurethane compositions may be produced from polyols and polymeric diphenyl methane diisocyanate (MDI) in accordance with the present invention.

The following foam formulation is utilised to show the effect of flame retardant.

| Reactant | Concentration (parts) |
|---|---|
| Thanol® R650x[1] | 100 |
| Water | 0.2 |
| Silicone surfactant | 2 |
| Trichloro fluoro methane | 40 (to foam density 30± 1kg/$m^3$) |
| Melamine salt | 10 |
| MDI | 117.5 |

1. An aromatic polyol, viz. polypropoxylated(2-3 moles) (nonyl)-phenol-diethanolamine-formaldehyde Mannich product (Texaco Chem.).

The above ingredients are mixed together for 10 seconds in a high speed stirrer (2000 rpm) at room temperature, with the isocyanate being added last, and then poured immediately into a cardboard mould. The exothermic reaction which ensues is allowed to free rise the foam.

Test specimens are cut from the foam after 3 days storage and subjected to the Limiting Oxygen Index Test (OI) and BS 4735 horizontal Burn text. Results are show in the Table below, and as a comparison the same foams material is produced without flame retardant.

Table 1

| Example | Salt from Example | Density kg/$m^3$ | OI% | BS 4735 Burn Length mm |
|---|---|---|---|---|
| - | None | 30.0 | 21.3 | >150 |
| 7 | 1 | 28.6 | 23.2 | 34 |
| 8 | 3 | 31.4 | 22.1 | 39 |
| 9 | 4 | 25.2 | 22.8 | 33 |
| 10 | 5 | 27.6 | 23.2 | 27 |
| 11 | 6 | 27.4 | 22.7 | 33 |

Example 12:

This example illustrates the ease with which flame retardant flexible foamed polyurethane compositions may be produced from polyols an. toluene diisocyanate in accordance with the present invention.

The following foam formulation was utilised to show the effect of flame retardant.

| Reactant | Concentration (parts) |
|---|---|
| Caradol® 48/2[1] | 100 |
| Silicone surfactant | 1 |
| Water | 4.7 |
| Propamine® A[2] | 0.4 |
| Stannous octoate | 0.25 |
| Melamine salt | 10 |
| Toluene diisocyanate | 55.5 |

1. Caradol is a polyether polyol (Shell)
2. Propamine A is an aliphatic tertiary amine catalyst for polyurethane foams (Lankro Chem.).

The above ingredients are mixed together in a high speed hand held stirrer (2000 rpm) at room temperature for 10 seconds and then poured as quickly as possible into a cardboard mould. The exothermic reaction which ensues is allowed to free-rise the foam.

For comparison a foam is prepared from the same reactants without flame retardant.

Test specimens are cut from the foam after 3 days storage and subjected to the Limiting Oxygen Index Test (OI) and the BS 4735 horizontal burn test. The results are show in Table 2 below.

Table 2

| Example | Salt from Example | Density | OI | BS 4735 |
|---|---|---|---|---|
| | | kg.m$^3$ | (%) | Burn Length |
| | | | | mm |
| - | None | 19.8 | 16.8 | >150 |
| 12 | 1 | 24.7 | 22.2 | 66 |

## Claims

1. A polyurethane or polyisocyanurate having incorporated therein a flame retardant amount of a melamine phosphonic acid salt of the general formula (I)

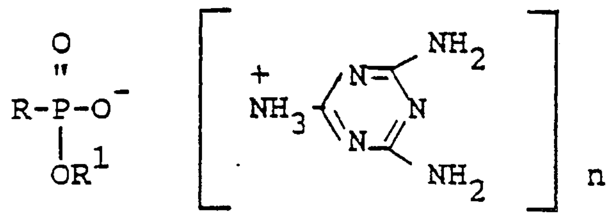 (I)

in which R is a $C_1$-$C_2$ alkyl group, a $C_5$-$C_6$ cycloalkyl group, a $C_6$-$C_{12}$ aryl group or a $C_7$-$C_{14}$ aralkyl group, R being unsubstituted or substituted by one or more of chlorine, bromine, hydroxy, amino, cyano or carboxy; $R^1$ is hydrogen, $C_1$-$C_6$ alkyl or $C_6$-$C_{12}$ aryl which is unsubstituted or substituted by one or more of chlorine, bromine or hydroxy or $R^1$ is a negative valency bond; and n is 1, or 2 when $R^1$ is a negative valency bond, provided that when R is methyl, $R^1$ is not hydrogen, methyl or a negative valency bond and when R is phenyl $R^1$ is not hydrogen or a negative valency bond.

2. A polyurethane or polyisocyanurate as claimed in claims 1 which contains from 1 to 200 parts by weight of melamine salt per 100 parts by weight of polyol used to make the polyurethane or polyisocyanurate.

3. A polyurethane or polyisocyanurate as claimed in claim 2 which contains from 3 to 100 parts by weight of melamine salt per 100 parts by weight of polyol.

4. A polyurethane or polyisocyanurate as claimed in claim 1 which also contains melamine itself, melamine borate, melamine phosphate or exfoliated graphite.

5. A polyurethane or polyisocyanurate as claimed in claim 1, in which R is unsubstituted or substituted by a chlorine, hydroxy, amino, cyano or carboxy group.

6. A polyurethane or polyisocyanurate as claimed in claim 1, in which $R^1$ is hydrogen, $C_1$-$C_2$alkyl or 2-hydroxyphenyl.

7. A polyurethane or polyisocyanurate as claimed in claim 6, in which R is methyl, carboxymethyl, carboxyhydroxymethyl, hydroxymethyl, cyclohexyl or 2-hydroxybenzyl.

European Patent Office

# EUROPEAN SEARCH REPORT

Application Number

EP 89 81 0734

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 061 605 (SIMON)<br>* Examples 1+2, col. 3; l. 11-24 * | 1-3,6 | C 08 K 5/531<br>C 08 L 75/04<br>C 08 L 79/04 |
| A | US-A-4 260 688 (SIMON)<br>* Col. 1, l. 23-45 * | 1-7 | |
| A | CHEMICAL ABSTRACTS, vol. 104, no. 12, 1986, p 67, abstract no. 89933t & Cell. Polym. 1985, 4(6),431-43 | | |

TECHNICAL FIELDS SEARCHED (Int. Cl.5)

C 08 K
C 08 L

The present search report has been drawn up for all claims

| Place of search | Date of completion of the search | Examiner |
|---|---|---|
| THE HAGUE | 04-01-1990 | WILSON A.J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)